# EUROPEAN PATENT SPECIFICATION

(11) **EP 0 470 530 B1**
(45) Date of publication and mention of the grant of the patent: **22.01.1997**
(21) Application number: 91113070.6
(22) Date of filing: 02.08.1991
(51) Int. Cl.: G07C 9/00, G06K 9/00, A61B 5/117

(54) **Fingerprint verification method**
Verfahren zur Prüfung von Fingerabdrücken
Méthode pour la vérification d'empreintes digitales

(30) Priority: 07.08.1990 JP 209052/90; 07.08.1990 JP 209053/90
(43) Date of publication of application: 12.02.1992
(73) Proprietor: YOZAN INC., Tokyo 112 (JP); SHARP KABUSHIKI KAISHA, Osaka 545 (JP)
(72) Inventor: Yamamoto, Makoto, Setagaya-ku, Tokyo 155 (JP)
(74) Representative: Grünecker, Kinkeldey, Stockmair & Schwanhäusser Anwaltssozietät

(56) References cited:
- EP-A- 0 173 972
- EP-A- 0 294 716
- WO-A-87/06378
- WO-A-89/03099
- PATENT ABSTRACTS OF JAPAN vol. 13, no. 269 (P-888) 21 June 1989 & JP-A-10 61 870
- PATENT ABSTRACTS OF JAPAN vol. 1, no. 151 (M-050) 6 December 1977 &JP-A-52 097 298
- PATENT ABSTRACTS OF JAPAN vol. 11, no. 291 (P-618) 19 September 1987& JP-A-62 085 391
- SYSTEMS, COMPUTERS, CONTROLS vol. 13, no. 5, September 1982, WASHINGTON US pages 81 - 89 NAKAMURA E.A. 'Fingerprint classification by directional distribution patterns'

## Description

### - Field of the Invention -

The present invention relates to a verification method by comparing a fingerprint to be examined with a reference fingerprint stored beforehand, and can be adapted to, for example, a security system which opens the door for only registered people.

### - Conventional Technology -

According to the conventional fingerprint verification method adapted to such security system, an image including the protuberant lines of the fingerprint is binarized and thinned so as to calculate protuberant line pattern. Then branch points, end points and curvature are extracted from the above protuberant line pattern as the main characteristics. Based on those characteristics, comparison is performed between a master image (image of reference fingerprint) and a sample image (image of fingerprint to be examined). Since the characteristics appear all over the fingerprint, it was preferable for the conventional fingerprint verification method to have a fingerprint which covers a wide area. Therefore, the image of the fingerprint has to be taken by rotating the finger which includes not only the front part of the finger but also the sides of the finger.

EP-A-0 173 972 describes a fingerprint verification method and, in particular, describes a method for determining the center position of the protuberant lines or ridge pattern. This step is carried out in order to determine if the finger has been impressed in the correct position. In other words, if the center position of the pattern coincides with the center zone of the image input surface then the identification step is subsequently carried out. Here, the center of the fingerprint pattern is determined by determining the angles of the ridges with respect to each scanning line in the binarized image.

Prior art WO-A-87/06378 discloses a method of fingerprint verification using a sensor device consisting of a two-dimensional array of image sensing elements. By means of threshold circuitry, the number of fingerprint ridges present in a line array of the sensor is counted. With this information, a ridge-density graph is built-up whereby the shape of this graph is unique for every fingerprint. With this method the center position of the fingerprint pattern is not determined.

Another prior art fingerprint verification method is disclosed in JP-A-52 097 298 which calculates vector data of the ridge contours in order to calculate the directions of the respective ridges. This method again involves a binarized image which does invoke binarizing errors such as distinguishing of ridges and moreover, is silent with respect to determining the center position of the ridge pattern.

### - Problems to be Solved -

The protuberant lines at the portion lower than the fingerprint; i.e., a joint part of a finger, are mostly arranged in horizontal direction; therefore, there are few characteristics. Furthermore, the image at the portion lower than the fingerprint is scarcely input correctly; therefore, it is not an effective data for the fingerprint verification. Accordingly, by using such image for the fingerprint verification, the accurate verification will be difficult to perform due to the vast volume of noises in data. Also, by applying the data at lower part of the fingerprint, volume of input data becomes large so that it becomes necessary to expand the memory capacity.

The present invention is invented so as to solve the above problem and has an object to provide a fingerprint verification method that realizes an accurate fingerprint verification by using a little volume of data.

Furthermore, when whole fingerprint is applied to the fingerprint verification, there is a problem that the way of impressing of the fingerprint to be examined is troublesome; therefore, time required for the fingerprint verification becomes long.

The present invention has an object to provide a fingerprint verification method that greatly simplifies the steps of generating a master image and a sample image used for the fingerprint verification, as well as realizes the accurate fingerprint verification with a short period of time.

### - Means for Solving Problems -

A fingerprint verification method according to the present invention comprises the steps of:
performing density partial differentials onto the corresponding fingerprint image with respect to 2 directions;
determining a point as a center of characteristics where a local maximum value of a histogram of corresponding partial differential value occurs in both directions;
performing a fingerprint verification by only using data at the portion upper than the corresponding center of characteristics.

Furthermore, a fingerprint verification method according to the second claim of the present invention comprises the steps of:
determining a fillet center of the corresponding fingerprint image as a center of characteristics;
performing a fingerprint verification by only using data at the portion upper than the corresponding center of characteristics.

In a preferred embodiment of the method according to the present invention there comprises the additional step of:
dividing the fingerprint image into a plurality of blocks; and
performing the fingerprint verification by only using data in a block which includes the corresponding center of characteristics.

### - Performance -

The lower portion of the fingerprint data than the center of characteristics is ignored, and only upper portion of the data is used for the fingerprint verification. Since most of the characteristics appear at upper part of the fingerprint, it is possible to perform an accurate fingerprint verification by effectively using the characteristics data.

### BRIEF DESCRIPTION OF THE DRAWINGS

Fig.1 shows a drawing showing the state of the fingerprint divided into a plurality of blocks;
Fig.2 shows a block diagram indicating a fingerprint verification system;
Fig.3 shows a diagram zooming the connection of the slanting surface of the right-angle prism and the finger;
Fig.4 shows an example diagram of the protuberant pattern for the fingerprint;
Fig.5 (I) shows a diagram of a histogram with respect to the change in density value of the pixels in area "I" in Fig.4;
Fig.5 (II) shows a diagram of a histogram with respect to the change in density value of the pixels in area "II" in Fig.4;
Fig.6 shows a diagram indicating the direction of the partial differential;
Fig.7 shows a diagram for the explanation of the calculation method of the center point of an image;
Fig.8 shows a diagram of a histogram with respect to the method of pixels in each direction code;
Fig.9 shows a diagram defining the direction codes;
Fig.10 shows a diagram indicating a fillet center.

### - Embodiment -

Hereinafter, a comparison image of an image according to the first embodiment of the present invention is described with referring to the attached drawings.

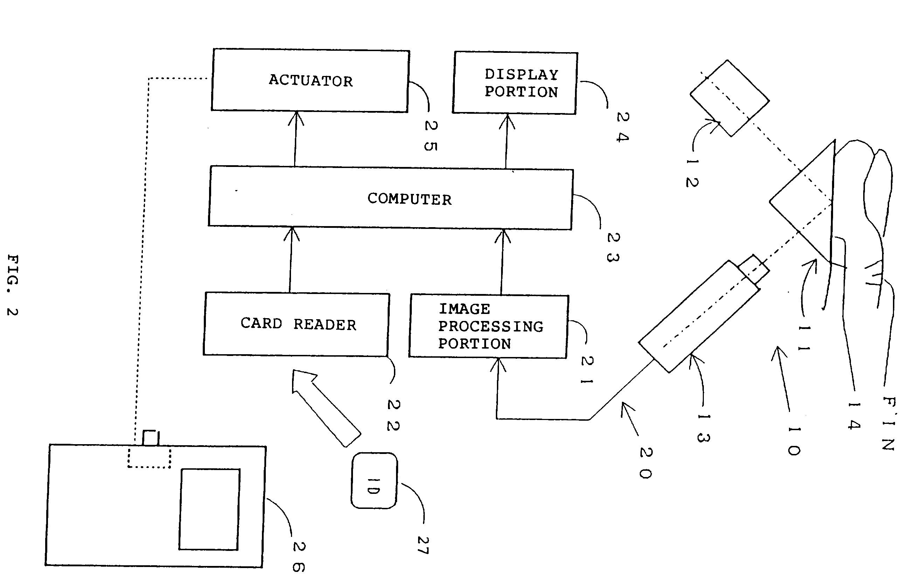

Fig. 2 shows a fingerprint verification system applying an image comparison method of the present invention. The fingerprint verification system consists of an image input system 10 and a verification processing system 20. The comparison processing is performed onto the image photographed by the image input system 10 at the verification processing system 20. At the image input system 10, the total reflection of an illumination incident upon a right-angle prism 11 from a luminous source 12 is detected by a CCD camera 13. A slanting surface 14 of the prism 11 is deemed to be the detection surface, where a finger FIN of which fingerprint is to be detected is contacted on. Without being contacted the finger FIN, whole illumination is totally reflected, so the image is detected all in white by the CCD camera 13.

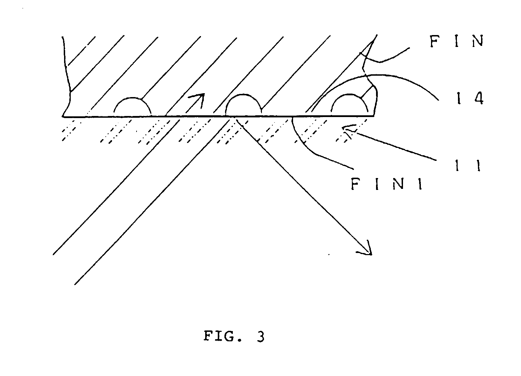

As it is shown in Fig. 3, the illumination at the protruded portions FIN 1 does not totally reflect and passes through the interface of the prism, since the angle of refraction on the interface of the prism changes. Therefore, the protruded portions of the fingerprint are input to the CCD camera 13 as the dark lines with gray levels.

The verification processing system 20 comprises an image processing portion 21 and a card reader 22. The master data is read when the person examined inserts an ID card 27 into the card reader 22, then the comparison is performed of the data input from the image input system 10 with the master data by a computer 23. The comparison results are displayed at a display portion 24. When the comparison results come up to the standard (coincidence of the fingerprints), an actuator 25 is operated and a door 26 is opened.

Various specifying manners of the master data are adaptable, such as inputting of ID number by the person examined from the keyboard.

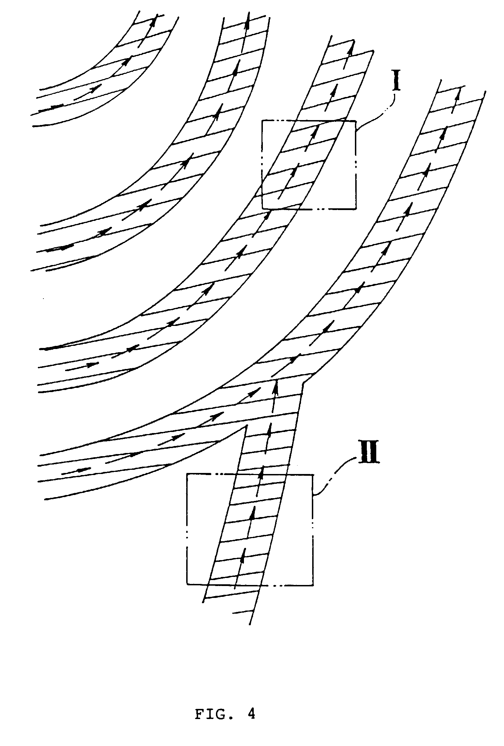

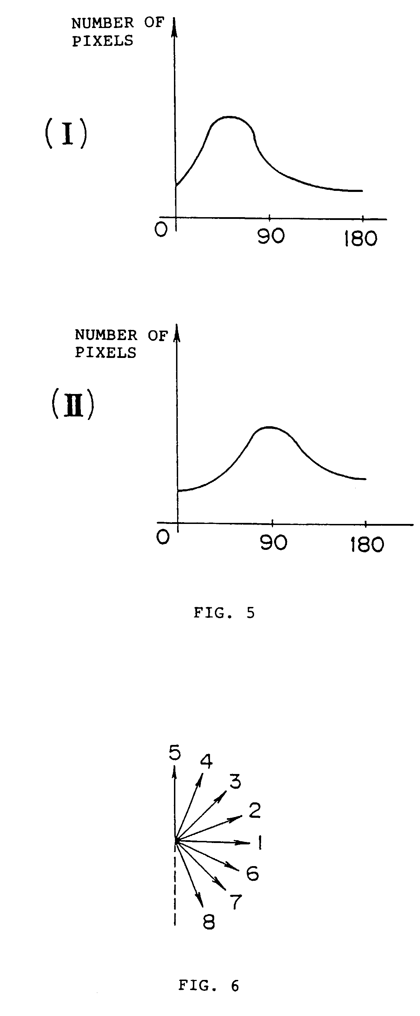

Fig. 4 shows the general directions of the protuberant lines of the fingerprint by arrows. For an index expressing those general directions, inventors adapted a histogram of the direction which partial differential value of the density value for each pixel becomes minimum. For example, the partial differential value of the density value of each pixel in an area "I" has the tendency to become minimum in the direction of 45 degrees, since the change in density value of each pixel in the area has the strong tendency to become minimum in the direction rotated to counterclockwise direction by 45 degrees from the horizontal direction. Accordingly, a histogram, as it is shown in Fig.5 (I), can be obtained with respect to the density value change of pixels in the area "I". The partial differential value of the density value of each pixel in an area "II" has the tendency to become minimum in the direction of 90 degree, since the change in density value of each pixel in the area has the strong tendency to become minimum in the direction rotated to counterclockwise direction by 90 degrees from the horizontal direction. Accordingly, a histogram, as it is shown in Fig.5. (II), can be obtained with respect to the density value of pixel in the area "II".

In order to obtain such histogram, following processings are performed.

The density values are calculated for each pixel of an input fingerprint image; i.e., a sample image. Meanwhile, the density values for each pixel of the reference fingerprint image to be compared with above sample image; i.e., a master image, are calculated beforehand, and stored in memory of the computer 23.

Then partial differential is performed according to the density value for each pixel among the neighborhood pixels. Here, the neighborhood pixels are not only pixels directly adjacent to an objective pixel on which partial differential is performed, but also the pixels distant by a few pixels from the objective pixel. As it is shown in Fig.6, the partial differential is performed over the range of 157.5 degrees; in the horizontal direction (number 1), in the directions rotated by 22.5 degrees in counterclockwise direction from the horizontal direction (number 2, 3, 4, and 5), and in the directions rotated by 22.5 degrees in clockwise direction from the horizontal direction (numbers 6, 7 and 8). When x and y coordinates are determined in horizontal and vertical directions, respectively, and the change value of the density value are deemed to be Δd, the partial differential value z can be expressed by:$\text{Z =} \frac{\text{Δd}}{\text{Δx+Δy}}$

The partial differential with respect to a digital image is discrete. Especially for the distance elements, it is necessary to apply comparatively long distances depending on the direction of the partial differential. However, when the distance is too long, differential is performed onto only the mountains of a fingerprint. As the result, the characteristics of the protuberant lines of the fingerprint are lost. Therefore, the minimum distance value should be applied with heightening the precision of the direction. According to the image processing system 10 in Fig.2, corrections with respect to the elements in Y direction are required for the image input to the CCD camera 13 for the examination of the fingerprint from 45 degrees slantways. The effective results were obtained by applying the following distances for the partial differential concerning the above correction; 0° (Δx=2, Δy=0), 22.5°(Δx=2, Δy=1), 45°(Δx=2, Δy=2), 67.5° ( Δx=2, Δy=3).

When the partial differential values in each direction of numbers from 1 to 8 (Fig. 6) for each pixel are calculated, smaller partial differential value is stored in a memory by comparing the precalculated partial differential value and newly calculated partial value. By storing the smaller partial differential values in each direction into the memory, the minimum partial differential values are stored in the memory by the time when all calculations with respect to 8 directions are completed. By repeating the above processing for all pixels, the minimum partial differential values for all pixels are calculated.

The partial differentials are performed again in each direction of numbers from 1 to 8 for each pixel, so as to compare those differential values with the precalculated minimum partial differential value. The number (out of numbers from 1 to 8 with respect to Fig. 6) is stored in the memory of the image processing portion corresponding to the direction of the newly calculated differential value that coincides to the minimum partial differential value. Accordingly, the directions which take the minimum partial differential values are calculated for all pixels, and the distributions of the directions that take the minimum partial differential values for a whole image can be obtained. Since the direction elements of each area in the image are extracted directly from the gray level image, it is possible to make the efficient use of the information of an original image.

Once the distribution is obtained of the directions which take the minimum partial differential value for the sample image, grasping of the tendency of the protuberant lines of the fingerprint is possible. Therefore, the fingerprint verification becomes possible by comparing the distribution with respect to the above direction with that of the master image. That is, data of the directions that take the minimum partial differential values for each pixel are compared for each corresponding pixels between the sample image and the master image. However, according to the present embodiment as it is described later, an image is separated into a plurality of blocks. An index is calculated based on the direction where the partial differential becomes the minimum according to the blocks upper than a center of the characteristics of the fingerprint image, so as to perform the comparison between the sample image and the master image. This is effective since many characteristics of the fingerprint appear at portion upper than the center of the characteristics.

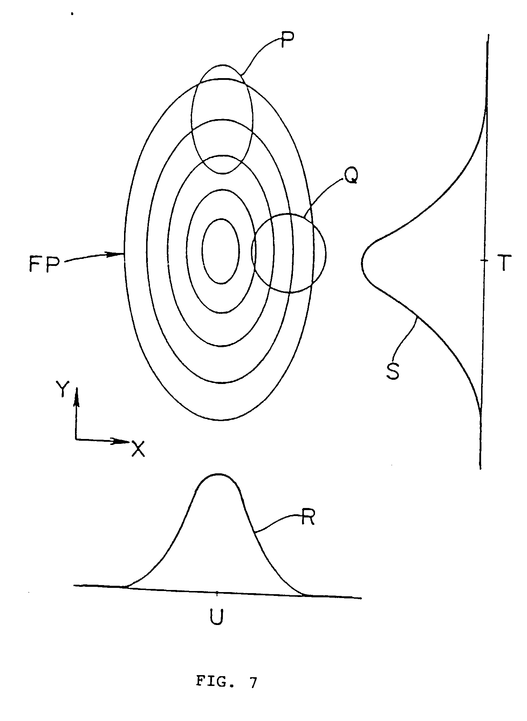

Before the comparison is performed between the sample image and the master image, justification of the positions for those images is performed. This justification of the positions is explained with referring to Fig. 7.

According to this figure, the protuberant lines FP of the fingerprint are arranged to make the spiral figure, so the pixels with the same density value are arranged along with this spiral. Here, the horizontal and vertical directions are deemed to be X and Y directions, respectively. When the partial differential is performed onto the change values of the density between adjacent pixels along Y direction, calculated change ratio of the density value according to Y direction becomes large at, for example, the area P where the protuberant lines lengthened in X direction, and become small at the area Q where the protuberant lines are lengthened in Y direction. Therefore, a histogram with respect to the partial differential value of the density value in Y direction becomes the maximum at the center as it is indicated by a letter R. Equivalent to the above, the change ratio of the density value according to X direction becomes small at the area P where the protuberant lines are lengthened in X direction, and becomes large at the area Q where the protuberant lines are lengthened in Y direction. Therefore, a histogram with respect to the partial differential value of the density value in X direction becomes the maximum at the center as it is indicated by a letter S.

According to the present embodiment, the maximal point (letter T) of the histogram (letter S) with respect to the change of density value along X direction is deemed to be a Y coordinate of a center point of the image. Also, the maximal point (letter U) of the histogram (letter R) with respect to the change of density value along Y direction is deemed to be a X coordinate of a center point of the image. The obtained center point as above is not the center of the configuration; it is the center of the characteristics of the image (for example, the center of the spiral). Accordingly, the point is determined as the center of the characteristics where the extreme value of the histogram of the density partial differential values occurs.

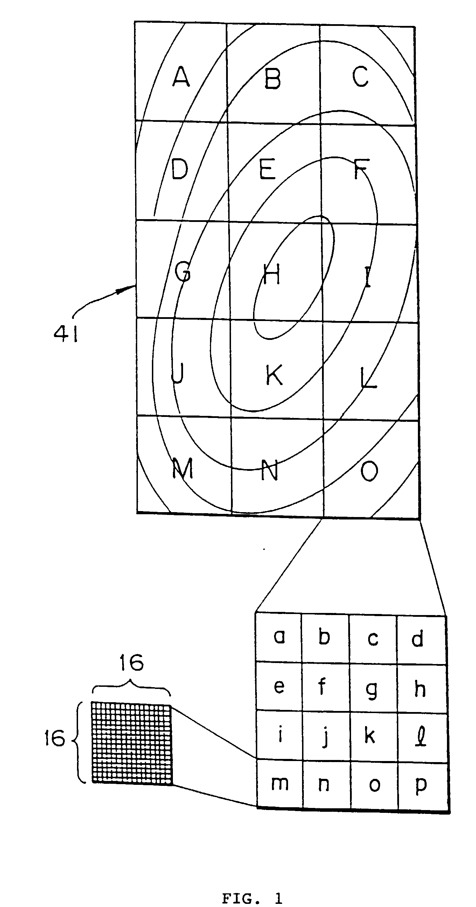

As it is shown in Fig.1, both the master image and the sample image are divided into, for example, 15 blocks from A to O, respectively. The justification of positions between the sample image and the master image is performed, so that the blocks of both images which include the center of the characteristics obtained by the manner described above coincide each other.

Hereinafter, the comparison judgment between the sample image and the master image are described.

Fig.1 shows the manner to divide a fingerprint image 41 into a plurality of blocks. This image 41 is divided into 15 blocks from A to O, each of which is further divided into 16 blocks from area a to p each comprising 16 x 16 pixels. According to the present embodiment, the comparison between the sample image and the master image is performed by applying the data with respect to the blocks upper than the center of characteristics; from A to I, out of blocks from A to O.

The total dispersions for each area from a to p of each of blocks from A to I are calculated. Fundamentally, the total dispersion is defined by the following formula:${\text{Total Dispersion = Dispersion Between Classes + Dispersion Within a Class = sin}}^{\text{2}} \text{(θ/2) + (Vm + Vs)/2}$ where, θ indicates an aberration angle of the direction where the partial differential value of the master image and the sample image becomes minimum, Vm indicates the dispersions within a class for each area of the master image, and Vs indicates the dispersions within a class for each area of the sample image. According to the embodiment, the total dispersion RE is defined by subtracting the total dispersion defined by the above formula from 1. That is, the total dispersion RE of the present embodiment is defined by:${\text{RE = 1 - sin}}^{\text{2}} \text{(θ/2) - (Vm + Vs)/2} {\text{= cos}}^{\text{2}} \text{(θ/2) - (Vm + Vs)/2}$

Accordingly, the following tendency is obtained that the higher the identification ratio is, the more the total dispersion increases.

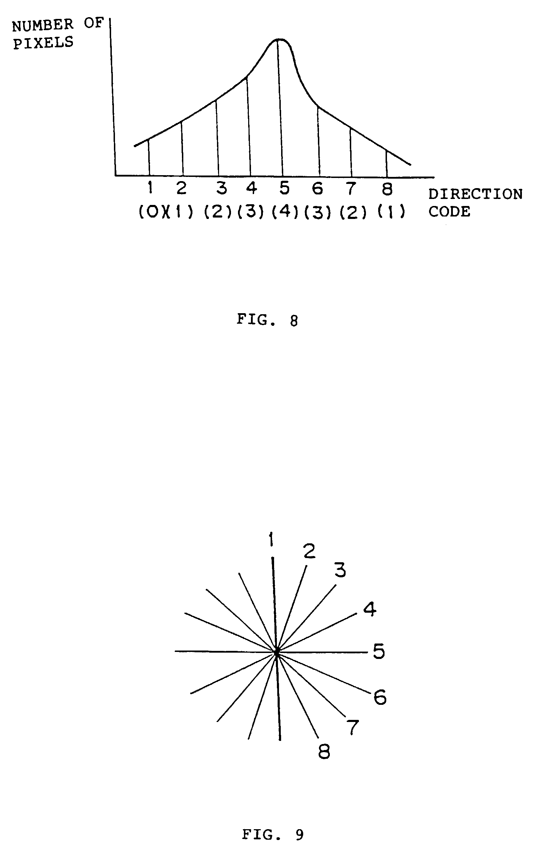

In order to obtain the total dispersion defined by the above formula (1), the dispersions within a class; Vm and Vs, with respect to the master image and the sample image are calculated beforehand. This is described with referring to Fig.8 and Fig.9. Fig.8 shows a histogram with respect to the number of pixels for the direction codes. Fig.9 shows the definition of the direction codes. That is, the direction toward the vertical direction is determined as a code "1". Based on this code, the number of codes are increased to "2", "3"..."8", as the direction rotates in clockwise direction by 22.5 degrees.

First, the direction code "1" is deemed to be a center point, temporally. Then the aberrations of directions are calculated with respect to the above direction code "1" for each direction code. Accordingly, the aberrations of directions with respect to the direction codes "2", "3", "4", "5", "6", "7" and "8" are 1, 2, 3, 4, 3, 2, and 1 (numbers in the parentheses in Fig.8), respectively. Here, the aberrations of directions with respect to the direction codes "2" and "8", "3" and "7", "4" and "6" are equivalent. This is because the aberration of direction does not consider whether it is in clockwise direction or in counterclockwise direction.

Next, the sum total T is calculated by multiplying the number of pixels for each direction code by a weight corresponding to the magnitude of its aberration of direction. Here, when the angle of aberration of direction is deemed to be θ, weight is sin²θ. When there is no aberration of direction, weight is 0.0. When the aberration of direction is 1, weight is 0.15. When the aberration of direction is 2, weight is 0.5. When the aberration of direction is 3, weight is 0.85. When the aberration of direction is 4, weight is 1.0. As above, the numbers of pixels for each direction code are multiplied by weights because it is considered that the farther the distance from the temporary center point becomes, the more the number of pixels for the dispersion within a class is influenced.

The value of the obtained sum of total T divided by the number of pixels, 256, in the area is the dispersion within a class. This dispersion within a class is calculated by deeming every direction codes to be a temporary center point. Therefore, totally 8 directions within a class are calculated for each area. Then, the minimum value of those dispersions within a class is calculated so as to determine this minimum value as the dispersion within a class of that area. Also, the direction code which corresponds to the minimum value of dispersion within a class is deemed to be the direction code with respect to that area. Accordingly, the dispersions within a class and the direction codes are determined for each area; from a to p.

The mean values of the dispersions within a class in each area; from a to p, is calculated for each of blocks from A to I. The dispersions within a class obtained as above are dispersions within a class; Vm and Vs, of the master image the sample image used for the above formula (1). Equivalent to the above, the mean value of direction codes in each area; from a to p, is calculated so as to be determined as the direction code of the blocks from A to I. This direction code is a code used for the above formula (1), as it is described later.

Next, cos²(θ/2) according to the above formula (1); that is the aberration of direction, is calculated. This calculation is performed by determining the angle as "θ" that corresponds to the difference of direction codes between the master image and the sample image according to the blocks from A to I. For example, when the difference of direction codes between the master image and the sample image is 1, θ is 22.5 degrees, so that the aberration of direction is 0.96. Equivalent to the above, when the difference is 2, θ is 45 degrees so that the aberration of direction is 0.85. When the difference is 3, θ is 67.5 degrees so that the aberration of direction is 0.69. When the difference is 4, θ is 90 degrees so that the aberration of direction is 0.5.

The total dispersion RE with respect to the blocks from A to I is calculated from the above formula (1), by using the aberration of direction (dispersion between classes) obtained as above, and the dispersion within a class; Vm and Vs. This total dispersion RE changes between 0 and 1. The more identical the sample and the master images are, the more the value of the total dispersion closes to 1. For example, when the sample image and the master image are almost identical with one another, the value of total dispersion RE with respect to the blocks from A to I becomes more than 0.8. Contrary to the above, when the sample image and the master image are not identical, the value of the total dispersion RE with respect to the blocks from A to I becomes less than 0.7.

Next the crosscorrelations are calculated with respect to the blocks from A to I. 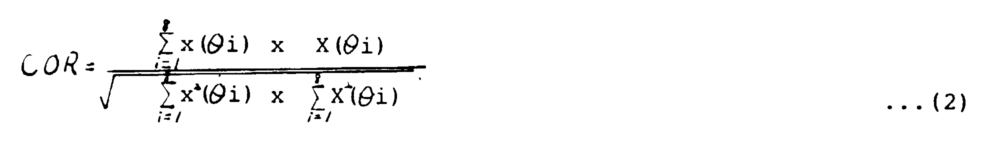 where, COR is the crosscorrelation, x(θi) is the number of pixels in θi(deg) direction with respect to the sample image, and X(θi) is the number of pixels in θi(deg) with respect to the master image.

The crosscorrelations, as it is similar to the case of the total dispersion, are calculated for each area; from a to p, first. Then mean value of the calculated crosscorrelations is determined as the crosscorrelation of corresponding blocks from A to I. The crosscorrelation changes between 0 and 1. The more identical the sample and the master images are, the more the value of the crosscorrelation closes to 1.

Then, the distances between classes are calculated with respect to the blocks from A to I. The distance between classes is defined as the following formula: 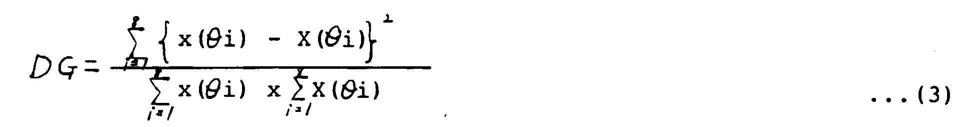 where, DG is the distance between classes, x(θi) is the number of pixels in θi(deg) direction with respect to the sample image, and X(θi) is the number of pixels in θi(deg) direction with respect to the master image.

The distances between classes, as it is similar to the case of the crosscorrelation, are calculated for each area; from a to p, first. Then mean value of the calculated distances between classes is determined as the distance between classes of corresponding blocks from A to I. The distance between classes changes between 0 and 1. The more identical the sample and the master images are, the more the value of the distance between classes closes to 0.

Accordingly, the total dispersions, the crosscorrelations and the distances between classes with respect to upper blocks; from A to I, than the block H which includes the center of characteristics are calculated with respect to both master and sample images. In order to judge whether or not the master image and the sample image with respect to the blocks from A to I coincide with one another, it is necessary to have the total dispersion of more than 0.7, the crosscorrelation of more than 0.96 and the distance between classes of less than 0.1.

When it is judged that the sample image and master image are different, the relative location between the sample image and the master image is changed in horizontal direction by 1 area (from a to p of Fig. 1). Then the comparison between images is performed by the same manner as it is described above. When it is judged again that images are different, the relative location between the sample image and the master image is changed in the opposite direction to the above by 1 area. Then the comparison between images is performed by the same manner as it is described above. When it is still judged that the sample image and the master image are different, even after the relative location of images is changed in horizontal direction, the relative location of images is changed in vertical direction by 1 area from the first location so as to perform the comparison.

The comparison between the sample image and the master image is performed by justifying their centers of characteristics with one another. When those images are judged to be different, the comparison between images are continuously performed by changing the relative location between images by 1 area to the right and left, then up and down, successively, from the first justified location. Accordingly, the comparison between images are performed by at most 5 times by changing their relative location to the right and left, then up and down. When images are judged to be different for 5 times, it is finally judged that the sample image and master image are different.

When such comparison method is applied to the fingerprint verification system shown in Fig.2, the door 26 is opened when the fingerprint to be examined (the sample image) is judged to be coincided with the reference fingerprint (the master image). When the fingerprint to be examined is judged that is not coincided with the reference fingerprint, the door 26 will not be opened, and the system will request the person to be examined to input his fingerprint again, or it will output the message of "No Admittance".

Hereinafter, other 2 embodiments according to the present invention are described. First, according to Fig.1, it is possible to perform fingerprint verification by using data of not only the block H, which includes the center of characteristics, but also blocks adjacent to the block H (for example, 1 or more than 1 blocks from D, E, F, G, I).

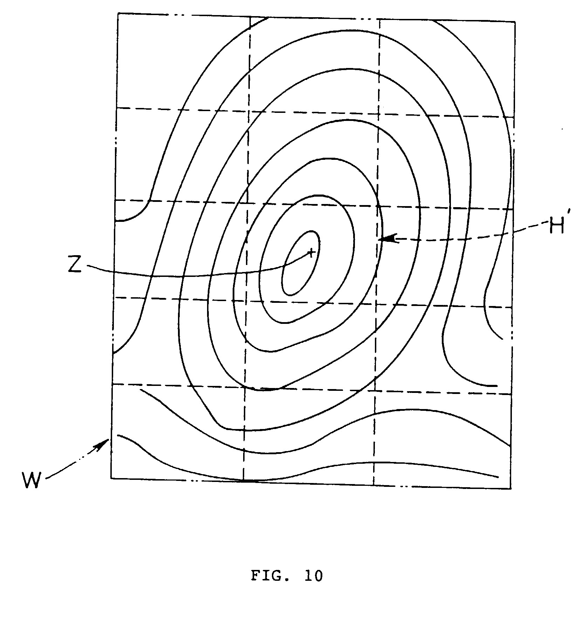

Second, according to Fig. 10, it is possible to perform fingerprint verification by only using data at the portion upper than a block H'. Here, the block H' includes the fillet center Z of the rectangle W surrounding the fingerprint image that is determined to be the center of the characteristics.

For the fingerprint verification, it is not necessary to adapt all indexes; that are, the total dispersion, the crosscorrelation, and the distance between classes. The comparison between images can be performed by using 1 or 2 indexes from the above.

Hereafter, the record embodiment is described. In this embodiment an image is separated into a plurality of blocks. An index is calculated based on the minimum direction according to the block including a center of the characteristics of the fingerprint image, so as to perform the comparison between the sample image and the master image. This is effective since many characteristics of the fingerprint are to appear around the neighborhood of the center of the characteristics.

The total dispersions for each area from a to p of the block H are calculated according to the formula (1).

The mean value of the dispersions within a class in each area; from a to p, is calculated. This mean value is determined as the dispersion within a class with respect to a block H. The dispersions within a class obtained as above are dispersions within a class; Vm and Vs, of the master image and the sample image used for the above formula (1). Equivalent to the above, the mean value of direction codes in each area; from a to p, is calculated so as to be determined as the direction code of the block H. This direction code is a code used for the above formula (1), as it is described later.

Next, cos²(θ/2) according to the above formula (1); that is the aberration of direction, is calculated. This calculation is performed by determining the angle as "θ" that corresponds to the difference of direction codes between the master image and the sample image according to the block H. For example, when the difference of direction codes between the master image and the sample image is 1, θ is 22.5 degrees, so that the aberration of direction is 0.96. Equivalent to the above, when the difference is 2, θ is 45 degrees so that the aberration of direction is 0.85. When the difference is 3, θ is 67.5 degrees so that the aberration of direction is 0.69. When the difference is 4, θ is 90 degrees so that the aberration of direction is 0.5.

The total dispersion RE with respect to the block H is calculated from the above formula (1), by using the aberration of direction (dispersion between classes) obtained as above, and the dispersion within a class; Vm and Vs. This total dispersion RE changes between 0 and 1. The more identical the sample and the master images are, the more the value of the total dispersion closes to 1. For example, when the sample image and the master image are almost identical with one another, the value of total dispersion RE with respect to the block H becomes more than 0.8. Contrary to the above, when the sample image and the master image are not identical, the value of the total dispersion RE with respect to the block H becomes less than 0.7.

Next, the crosscorrelation is calculated with respect to the block H.

The crosscorrelations, as it is similar to the case of the total dispersion, are calculated for each area; from a to p, first. Then mean value of the calculated crosscorrelations is determined as the crosscorrelation of corresponding block H. The crosscorrelation changes between 0 and 1. The more identical the sample and the master images are, the more the value of the crosscorrelation closes to 1.

Then, the distance between classes is calculated with respect to the block H.

This distances between classes, as it is similar to the case of the crosscorrelation, are calculated for each area; from a to p, first. Then mean value of the calculated distances between classes is determined as the distance between classes of corresponding block H.

Accordingly, the total dispersion, the crosscorrelation and the distance between classes of the block H are calculated with respect to both master and sample images, which include the center of characteristics. In order to judge whether or not the master image and the sample image coincide with each other, it is necessary to have the total dispersion of more than 0.7, the crosscorrelation of more than 0.96 and the distance between classes of less than 0.1.

Hereinafter, other 2 embodiments according to the present invention are described. First, according to Fig.1, it is possible to perform fingerprint verification by using data of not only the block H, which includes the center of characteristics, but also blocks adjacent to the block H (for example, 1 or more than 1 blocks from D, E, F, G, I).

Second, according to Fig. 10, it is possible to perform fingerprint verification by only using data with respect to a block H'. Here, the block H' includes the fillet center Z of the rectangle W surrounding the fingerprint image that are determined to be the center of the characteristics. Furthermore, it is possible to perform the fingerprint verification by using data in the block H' including the fillet center and adjacent blocks to the block H'.

### - Advantages of the Present Invention -

As mentioned above, it is possible to have an effect of realizing an accurate fingerprint verification by using a little volume of data.

As mentioned above, it is possible to have an effect of greatly simplifying the steps of generating the master image and the sample image used for the fingerprint verification, as well as realizing the accurate fingerprint verification with a short period of time.

## Claims

1. A fingerprint verification method including the step of determining a point as a center of characteristics,
**characterized by**
comprising the steps of:
performing density partial differentials onto a corresponding fingerprint image with respect to 2 directions;
determining said point as said center of characteristics where a local maximum of a histogram of corresponding partial differential value occurs in both directions;
performing a fingerprint verification by only applying data at the fingerprint portion upper than the corresponding center of characteristics.

2. A fingerprint verification method according to claim 1 further comprising the initial step of:
dividing a fingerprint image into a plurality of blocks; and
performing said fingerprint verification by only applying data in a block which includes the corresponding center of characteristics.

3. A fingerprint verification method according to claim 1, further comprising the initial step of:
dividing a fingerprint image into a plurality of blocks; and
performing said fingerprint verification by only applying data in a block which include the corresponding center of characteristics and in blocks in the neighborhood thereof.

## Patentansprüche

1. Ein Fingerabdruckverifikationsverfahren, umfassend die Schritte der Bestimmung eines Punkts als Zentrum der Charakteristika,
**dadurch gekennzeichnet,**
daß es die Schritte aufweist:
Bestimmen partieller Dichtedifferentiale für ein entsprechendes Fingerabdruckbild in bezug auf zwei Richtungen;
Bestimmen des Punkts, in dem ein lokales Maximum eines Histogramms entsprechender partieller Differentialwerte in beiden Richtungen auftritt, als Zentrum der Charakteristika;
Durchführen einer Fingerabdruckverifikation durch ledigliches Verwenden der Daten in dem Fingerabdruckabschnitt, der über dem entsprechenden Zentrum der Charakteristika liegt.

2. Ein Fingerabdruckverifikationsverfahren nach Anspruch 1, weiter umfassend den anfänglichen Schritt:
Teilen eines Fingerabdruckbildes in eine Mehrzahl von Blöcken; und
Durchführen der Fingerabdruckverifikation durch ledigliches Verwenden der Daten in einem Block, der das entsprechende Zentrum der Charakteristika umfaßt.

3. Ein Fingerabdruckverifikationsverfahren nach Anspruch 1, weiter umfassend den anfänglichen Schritt:
Teilen eines Fingerabdruckbildes in eine Mehrzahl von Blöcken; und
Durchführen der Fingerabdruckverifikation durch ledigliches Verwenden der Daten in einem Block, der das entsprechende Zentrum der Charakteristika umfaßt und in Blöcken in der Nachbarschaft desselben.

## Revendications

1. Procédé de vérification d'empreinte digitale comprenant l'étape de détermination d'un point en tant que centre de caractéristiques,
caractérisé en ce qu'il comprend les étapes suivantes :
la réalisation de différentiels partiels de densité sur une image d'empreinte digitale correspondante par rapport à deux directions ;
la détermination dudit point en tant que dit centre de caractéristiques où une valeur maximale locale d'un histogramme d'une valeur différentielle partielle correspondante se produit dans les deux directions ;
la réalisation d'une vérification d'empreinte digitale en appliquant seulement des données au niveau de la partie d'empreinte digitale supérieure au centre correspondant de caractéristiques.

2. Procédé de vérification d'empreinte digitale selon la revendication 1, comprenant, de plus, l'étape initiale suivante :
la division d'une image d'empreinte digitale en une pluralité de blocs ; et
la réalisation de ladite vérification d'empreinte digitale en appliquant seulement des données dans un bloc qui comprend le centre correspondant des caractéristiques.

3. Procédé de vérification d'empreinte digitale selon la revendication 1, comprenant, de plus, l'étape initiale suivante :
la division d'une image d'empreinte digitale en une pluralité de blocs ; et
la réalisation de ladite vérification d'empreinte digitale en appliquant seulement des données dans un bloc qui comprend le centre correspondant des caractéristiques et dans des blocs au voisinage de ce dernier.
